# EUROPEAN PATENT APPLICATION

(11) **EP 4 796 267 A1**
(43) Date of publication of application: **26.08.2026**
(21) Application number: 25213516.5
(22) Date of filing: 04.11.2025
(51) Int. Cl.: B25J 9/16, G05D 1/00

(54) **COORDINATED MULTI-ROBOT MANAGEMENT**

(30) Priority: 19.02.2025 US 202519057463
(71) Applicant: Yokogawa Electric Corporation, Musashino-shi, Tokyo 180-8750 (JP)
(72) Inventor: DELA ROSA, Mark Rodel Uy, Tokyo, 180-8750 (JP); BHANDARI, Saurabh, Tokyo, 180-8750 (JP)
(74) Representative: Henkel & Partner mbB

(57) **Abstract**

A processing unit is disclosed for managing and coordinating multiple robots in an environment. The processing unit receives parameters from sensors describing at least one of an activity and a capability of a first robot and a second robot and uses the parameters to determine that an unexpected event has occurred within an environment. The processing unit then sends an assignment command to one or both of the first robot and the second robot, wherein the assignment command causes the second robot to automatically perform at least one task in the first set of tasks or causes the first robot to automatically perform at least one task in the second set of tasks.

## Description

### FIELD OF THE DISCLOSURE

The present disclosure relates generally to systems and methods for controlling robots and particularly to controlling multiple robots to perform portions of a coordinated task.

### BACKGROUND

A single mission can be performed by one robot at a particular time. Robots may comprise specialized hardware and software that make the robot well suited for one mission but poorly suited for another mission. For example, robot A from vendor X can climb stairs, but it does not have the explosion-proof capability that robot B from vendor Y possesses. Furthermore, in a manufacturing site/facility or industrial place, typically a number of complex missions/task groups which comprise lots of individual tasks need to be executed in parallel or sequence by multiple robots, which impose extreme difficulties of coordinating among the plurality of individual tasks and the multiple robots to ensure efficient and safe production and/or other operations.

### SUMMARY

While multiple robots may be configured to perform a more complex mission, coordinating the individual actions of each robot is required. Robots must be enabled to execute their respective missions in parallel and/or in sequence with robots of various types and vendors. Coordinating multi-vendor robots is important to leverage the specialized abilities of each robot to successfully complete a mission that no single robot can perform. Furthermore, in an event of robot failure during mission execution, capabilities are needed to enable a robot reinforcement to continue the mission from the point of failure. Without such a feature, a failed robot would lead to a failed mission and serious consequences (e.g. leading to downtime or safety hazards in an industrial place) for critical tasks.

These and other needs are addressed by the various embodiments and configurations of the present disclosure. The present disclosure can provide a number of advantages depending on the particular configuration. These and other advantages will be apparent from the disclosure contained herein.

Benefits of the embodiments disclosed herein include reduction in the use of systems and personnel used to configure missions, improved accuracy, improved timing accuracy of multi-robot coordinated activities, advanced knowledge of robot availability, robot reinforcements to complete tasks initiated by a failed robot, parallel task performance by multiple robots, and coordination of identical robots and robots that are of a dissimilar type and/or manufacturers (e.g., different operating systems, different instruction sets, different user interfaces, different reporting formats, etc.) using a single controller interface.

In some aspects, the techniques described herein relate to a robot fleet management system for executing a plurality of tasks within an environment, including: a memory device for storing a record of the plurality of tasks; a first robot configured to execute a first set of the plurality of tasks associated with a first set of equipment within the environment; a first sensor connected to the first robot for sensing a first set of parameters; a second robot configured to execute a second set of the plurality of tasks associated with a second set of equipment within the environment; a second sensor connected to the second robot for sensing a second set of parameters; and a processing unit configured to re-group the first set of the plurality of tasks and the second set of the plurality of tasks in response to an unexpected event, wherein the unexpected event associated with a predetermined change of at least one of the first set of parameters and the second set of parameters, such that to maximize execution of the first set of the plurality of tasks and the second set of the plurality of tasks, and update the record of the memory device.

In some aspects, the techniques described herein relate to a robot fleet management system, wherein the first set of parameters is associated with at least one of the following: current weather associated with the environment, weather forecast associated with the environment, and operation state of the first set of equipment.

In some aspects, the techniques described herein relate to a robot fleet management system, wherein the second set of parameters is associated with at least one of the following: current weather associated with the environment, weather forecast associated with the environment, and operation state of the second set of equipment.

In some aspects, the techniques described herein relate to a robot fleet management system, wherein at least one of the first set of parameters and the second set of parameters includes at least one of the following: temperature, humidity, wind force, air quality, noise and pressure.

In some aspects, the techniques described herein relate to a robot fleet management system, wherein the processing unit further configured to create an additional task in response to the unexpected event, wherein the additional task associated with at least one of the following: the first set of equipment within the environment, the second set of equipment within the environment and a third set of equipment within the environment.

In some aspects, the techniques described herein relate to a robot fleet management system, wherein each one of the plurality of tasks and the additional task is associated with a task definition, wherein the task definition is determined by at least one of: a task type, a sequence of execution of the task, a pre-condition of execution of the task, a post condition of execution of the task, a task start condition, a task complete condition, and a task failure condition.

In some aspects, the techniques described herein relate to a robot fleet management system, wherein the processing unit further configured to re-group the first set of the plurality of tasks, the second set of the plurality of tasks and the additional tasks in accordance with the task definition of each of the first set of the plurality of tasks, the second set of the plurality of tasks and the additional task.

In some aspects, the techniques described herein relate to a robot fleet management system, wherein the processing unit further configured to assign the first set of the plurality of tasks, the second set of the plurality of tasks and the additional tasks (re-grouped) to at least one of the first robot, the second robot and a third robot for maximizing the execution.

In some aspects, the techniques described herein relate to a robot fleet management system, wherein the at least one of the first robot, the second robot and the third robot further configured to determine executing at least the first set of the plurality of tasks, the second set of the plurality of tasks and the additional tasks (re-grouped) based on a priority determined for the at least the first set of the plurality of tasks, the second set of the plurality of tasks and the additional tasks (re-grouped).

In some aspects, the techniques described herein relate to a robot fleet management system, wherein the processing unit further configured to assign the first set of the plurality of tasks and the second set of the plurality of tasks (re-grouped) to at least one of the first robot and the second robot and a third robot for maximizing the execution.

In some aspects, the techniques described herein relate to a robot fleet management system, wherein the processing unit further configured to simulate assigning the first set of the plurality of tasks and the second set of the plurality of tasks (re-grouped) to at least one of the first robot, the second robot and the third robot, determine a simulation result, and in response to determining a success of the simulation result, execute the first set of the plurality of tasks and the second set of the plurality of tasks (re-grouped).

In some aspects, the techniques described herein relate to a robot fleet management system, wherein the processing unit is further configured to: update at least one of the first set of the plurality of tasks and the second set of the plurality of tasks in response to a change of robot capability, wherein the robot capability is determined in accordance with at least one of: a robot type, health status of the robot.

In some aspects, the techniques described herein relate to a robot fleet management system, wherein an update to at least one of the first set of the plurality of tasks and the second set of the plurality of tasks includes changing a task definition of the at least one of the first set of the plurality of tasks and the second set of the plurality of tasks.

In some aspects, the techniques described herein relate to a robot fleet management system, wherein maximizing the execution includes achieving a task execution objective, wherein the task execution objective includes at least one of: completing a maximum amount of the first set of the plurality of tasks and the second set of the plurality of tasks, completing the first set of the plurality of tasks and the second set of the plurality of tasks within a predetermined time period, completing the first set of the plurality of tasks and the second set of the plurality of tasks within an acceptable period of delay, completing the first set of the plurality of tasks and the second set of the plurality of tasks using optimized resources.

In some aspects, the techniques described herein relate to a robot fleet management system, wherein the processing unit is further configured to receive a failure report associated with achieving one of the task execution objective.

In some aspects, the techniques described herein relate to a robot fleet management system, wherein at least one of the first robot and the second robot are further configured to communicate its status to the processing unit, wherein the status includes at least one of: robot location, battery level, robot availability.

In some aspects, the techniques described herein relate to a robot fleet management system, wherein the processing unit is further configured to evaluate robot capability of at least one of the first robot and the second robot based on its status.

In some aspects, the techniques described herein relate to a robot fleet management system, wherein the processing unit is further configured to assign the first set of the plurality of tasks and the second set of the plurality of tasks to at least one of the first robot and the second robot, in response to determining that at least one of the first robot and the second robot is capable of executing the first set of the plurality of tasks and the second set of the plurality of tasks.

In some aspects, the techniques described herein relate to a robot fleet management system, wherein the first set of the plurality of tasks and the second set of the plurality of tasks have been re-grouped into at least one task group, wherein the tasks in the at least one task group are having at least one of: substantially similar complexity level, associated with the same equipment, associated with the same type of equipment, or locations of the tasks are within the same area of the environment.

In some aspects, the techniques described herein relate to a robot fleet management system, including: a processing unit; and a memory device coupled with the processing unit and including data stored thereon that, when executed by the processing unit, enables the processing unit to: receive a first set of parameters from a first sensor, the first set of parameters describing at least one of an activity and a capability of a first robot, wherein the first robot is configured to execute a first set of tasks in a plurality of tasks; receive a second set of parameters from a second sensor, the second set of parameters describing at least one of an activity and a capability of a second robot, wherein the second robot is configured to execute a second set of tasks in the plurality of tasks; based on the first set of parameters and the second set of parameters, determine an unexpected event has occurred within an environment; and based on determining that the unexpected event has occurred within the environment, send an assignment command to one or both of the first robot and the second robot, wherein the assignment command causes the second robot to automatically perform at least one task in the first set of tasks or causes the first robot to automatically perform at least one task in the second set of tasks.

In some aspects, the techniques described herein relate to a robot fleet management system, wherein the first set of tasks is associated with a first piece of equipment.

In some aspects, the techniques described herein relate to a robot fleet management system, wherein the second set of tasks is associated with a second piece of equipment that is different from the first piece of equipment.

In some aspects, the techniques described herein relate to a robot fleet management system, wherein the assignment command causes the first robot and the second robot to collectively optimize an execution of the plurality of tasks.

In some aspects, the techniques described herein relate to a robot fleet management system, wherein the first set of parameters is associated with at least one of the following: current weather associated with the environment, weather forecast associated with the environment, and operation state of a first set of equipment.

In some aspects, the techniques described herein relate to a robot fleet management system, wherein the second set of parameters is associated with at least one of the following: current weather associated with the environment, weather forecast associated with the environment, and operation state of the second set of equipment.

In some aspects, the techniques described herein relate to a robot fleet management system, wherein at least one of the first set of parameters and the second set of parameters includes at least one of the following: temperature, humidity, wind force, air quality, noise and pressure.

In some aspects, the techniques described herein relate to a robot fleet management system, wherein based on determining that the unexpected event has occurred within the environment, the processing unit creates an additional task and adds the additional task to the plurality of tasks.

In some aspects, the techniques described herein relate to a robot fleet management system, wherein the first robot is assigned to tasks in the plurality of tasks based on the capability of the first robot, wherein the second robot is assigned to tasks in the plurality of tasks based on the capability of the second robot, and wherein the capability of the first robot is different from the capability of the second robot.

In some aspects, the techniques described herein relate to a robot fleet management system, wherein each task in the plurality of tasks is associated with a task definition, wherein the task definition associated with a task is determined by at least one of: a task type, a sequence of execution of the task, a pre-condition of execution of the task, a post condition of execution of the task, a task start condition, a task complete condition, and a task failure condition.

In some aspects, the techniques described herein relate to a robot fleet management system, wherein the assignment command is further sent to a third robot.

In some aspects, the techniques described herein relate to a robot fleet management system, wherein a capability of the third robot is different from the capability of the first robot and the capability of the second robot.

In some aspects, the techniques described herein relate to a robot fleet management system, wherein the third robot includes an availability that is better than an availability of the first robot or an availability of the second robot.

In some aspects, the techniques described herein relate to a robot fleet management system, wherein the assignment command is generated to achieve a task execution objective.

In some aspects, the techniques described herein relate to a robot fleet management system, wherein the task execution objective includes at least one of: completing a maximum amount of the first set of tasks in the plurality of tasks and the second set of tasks in the plurality of tasks, completing the first set of tasks in the plurality of tasks and the second set of tasks in the plurality of tasks within a predetermined time period, completing the first set of tasks in the plurality of tasks and the second set of tasks in the plurality of tasks within an acceptable period of delay, completing the first set of tasks in the plurality of tasks and the second set of tasks in the plurality of tasks using optimized resources.

In some aspects, the techniques described herein relate to a robot fleet management system, wherein the data stored on the memory device further enables the processing unit to receive a failure report associated with a robot's failure to achieve at least one task in the task execution objective.

In some aspects, the techniques described herein relate to a robot fleet management system, wherein the data stored on the memory device further enables the processing unit to receive a robot status for at least one of the first robot and the second robot.

In some aspects, the techniques described herein relate to a robot fleet management system, wherein the robot status indicates at least one of the following: robot location, battery level, and robot availability.

In some aspects, the techniques described herein relate to a robot fleet management system, wherein the data stored on the memory device further enables the processing unit to evaluate the capability of the first robot and/or the capability of the second robot based on the robot status.

In some aspects, the techniques described herein relate to a robot fleet management system, wherein the data stored on the memory device further enables the processing unit to re-group tasks from the plurality of tasks into a task group for performance by the first robot or the second robot, wherein the tasks in the task group include at least one of: tasks having a substantially similar complexity, tasks being associated with common equipment, tasks being associated with a same type of equipment, and tasks being associated with a common location.

A system on a chip (SoC) including any one or more of the above aspects or aspects of the embodiments described herein.

One or more means for performing any one or more of the above or aspects of the embodiments described herein.

Any aspect in combination with any one or more other aspects.

Any one or more of the features disclosed herein.

Any one or more of the features as substantially disclosed herein.

Any one or more of the features as substantially disclosed herein in combination with any one or more other features as substantially disclosed herein.

Any one of the aspects/features/embodiments in combination with any one or more other aspects/features/embodiments.

Use of any one or more of the aspects or features as disclosed herein.

Any of the above aspects or aspects of the embodiments described herein, wherein the data storage comprises a non-transitory storage device, which may further comprise at least one of: an on-chip memory within the processor, a register of the processor, an on-board memory co-located on a processing board with the processor, a memory accessible to the processor via a bus, a magnetic media, an optical media, a solid-state media, an input-output buffer, a memory of an input-output component in communication with the processor, a network communication buffer, and a networked component in communication with the processor via a network interface.

It is to be appreciated that any feature described herein can be claimed in combination with any other feature(s) as described herein, regardless of whether the features come from the same described embodiment.

The phrases "at least one," "one or more," "or," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B, and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Aspects of the present disclosure may take the form of an embodiment that is entirely hardware , an embodiment that is entirely software (including firmware, resident software, micro-code, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible, non-transitory medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device. Program code embodied on a computer-readable medium may be transmitted using any appropriate medium, including, but not limited to, wireless, wireline, optical fiber cable, RF, etc., or any suitable combination of the foregoing.

The terms "determine," "calculate," "compute," and variations thereof, as used herein, are used interchangeably and include any type of methodology, process, mathematical operation or technique.

The term "means" as used herein shall be given its broadest possible interpretation in accordance with 35 U.S.C., Section 112(f) and/or Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The preceding is a simplified summary of the disclosure to provide an understanding of some aspects of the disclosure. This summary is neither an extensive nor exhaustive overview of the disclosure and its various embodiments. It is intended neither to identify key or critical elements of the disclosure nor to delineate the scope of the disclosure but to present selected concepts of the disclosure in a simplified form as an introduction to the more detailed description presented below. As will be appreciated, other embodiments of the disclosure are possible utilizing, alone or in combination, one or more of the features set forth above or described in detail below. Also, while the disclosure is presented in terms of exemplary embodiments, it should be appreciated that an individual aspect of the disclosure can be separately claimed.

### BRIEF DESCRIPTION OF THE DRAWINGS

The present disclosure is described in conjunction with the appended figures:
Fig. 1 depicts a system in accordance with embodiments of the present disclosure;
Fig. 2 depicts a process in accordance with embodiments of the present disclosure;
Fig. 3 depicts a system in accordance with embodiments of the present disclosure;
Fig. 4 depicts a data structure in accordance with embodiments of the present disclosure; and
Fig. 5 depicts a device in a system in accordance with embodiments of the present disclosure.

### DETAILED DESCRIPTION

The ensuing description provides embodiments only and is not intended to limit the scope, applicability, or configuration of the claims. Rather, the ensuing description will provide those skilled in the art with an enabling description for implementing the embodiments. It will be understood that various changes may be made in the function and arrangement of elements without departing from the spirit and scope of the appended claims.

Any reference in the description comprising a numeric reference number, without an alphabetic sub-reference identifier when a sub-reference identifier exists in the figures, when used in the plural, is a reference to any two or more elements with the like reference number. When such a reference is made in the singular form, but without identification of the sub-reference identifier, it is a reference to one of the like numbered elements, but without limitation as to the particular one of the elements being referenced. Any explicit usage herein to the contrary or providing further qualification or identification shall take precedence.

The exemplary systems and methods of this disclosure will also be described in relation to analysis software, modules, and associated analysis hardware. However, to avoid unnecessarily obscuring the present disclosure, the following description omits well-known structures, components, and devices, which may be omitted from or shown in a simplified form in the figures or otherwise summarized.

For purposes of explanation, numerous details are set forth in order to provide a thorough understanding of the present disclosure. It should be appreciated, however, that the present disclosure may be practiced in a variety of ways beyond the specific details set forth herein.

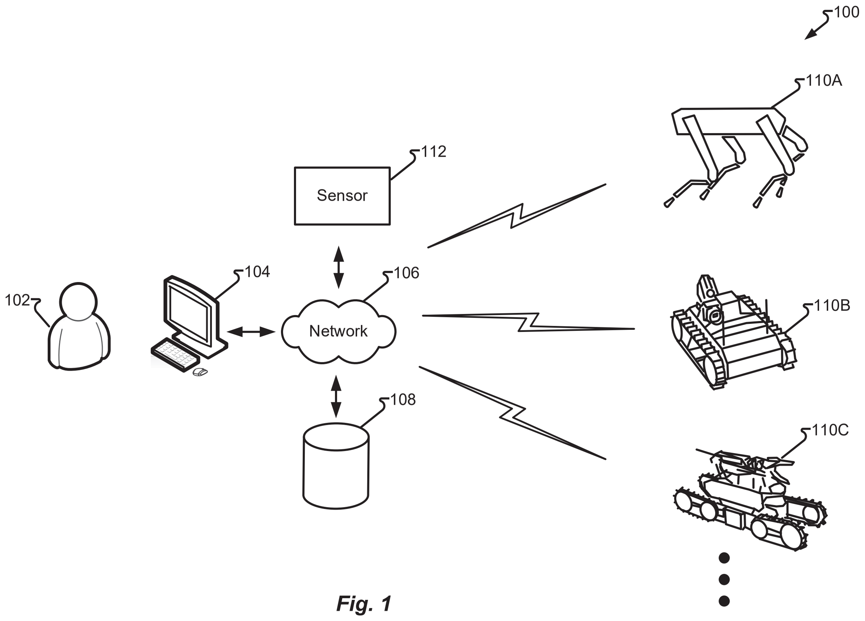

Fig. 1 depicts system 100 in accordance with embodiments of the present disclosure. System 100 illustrates one topology for executing a robot fleet management system. Those of ordinary skill in the art will appreciate that other computing and/or data storage devices and topologies thereof may be utilized to select and operate robots 110 (e.g., robot 110A, 110B, 110C, etc.), without departing from the scope of the embodiments herein. Network 106 comprises configured networking components to enable communications between two or more of computers 104, data storage 108 and one or more robots 110. Robots 110 may logically connect to network 106 via wired or wireless communication links.

User 102 interacts with a processing unit, such as computer 104. The processing unit may comprise or access a memory device, such as a non-transitory computer memory operable to maintain instructions to enable and execute such instructions by the processing unit. In one embodiment, the processing unit comprises computer 104 and is configured to, among other operations, present information to user 102 and receive inputs therefrom. To avoid unnecessarily complicating the figures and associated description, computer 104 is illustrated as a stand-alone computing device (e.g., a personal computer). However, the processing unit is variously embodied. In one embodiment, the processing unit is computer 104, which may comprise or access, either directly or via network 106, data storage 108. The processing unit, such as computer 104, may comprise a stand-alone computer (e.g., personal computer, laptop, smart phone, etc.), in other embodiments, the processing unit comprises one or more other computing device (not shown) such as servers, "cloud" processing devices, etc., wherein computer 104 is embodied as a client, such as in a client-server or client-cloud configuration. The processing unit may receive and/or provide information from sensor(s) 112, data storage 108, robots 110, and/or other sources directly or via network 106.

The processing unit (e.g., computer 104) may receive inputs from user 102, such as to receive and execute ad hoc tasks for one or more robots 110, access and initiate pre-planned tasks for robot 110, and/or receive data from sensor 112. The processing unit may access or receive parameters from sensor 112, data storage 108, and/or one or more robots 110 regarding activities and operation of at least one of robots 110. For example, data storage 108 may comprise data records indicating the capabilities of robot 110 (e.g., robot 110A is a robotic "dog," able to navigate rough terrain, with stereoscopic vision, that moves at three meters per second, may carry fifty kilos of additional weight, etc.). The processing unit may obtain current parameters or capabilities of one or more robots 110 (e.g., robot 110B is currently engaged in performing "task 35," is located five meters east of the storage tank, its data link is fair, its battery life is 43%, etc.) from data storage 108, directly from the robot 110, sensor 112 (e.g., a motion sensor, camera, WiFi access point, etc.), and/or other sources.

Sensor(s) 112 may comprise devices directly outputting an electronic signal in response to an observed condition or state. In another embodiment, sensor 112 may report data from other sources. For example, sensor 112 may comprise a reporting device that receives a sensed value from a sensor not otherwise accessible (e.g., not attached to network 106) and/or receive and report an analyzed or aggregation of sensed signals (e.g., weather forecast).

Data storage 108 may comprise one or more tables or other data storage structures having records. Data storage 108 may comprise records describing robot tasks (e.g. routine check of industrial assets, which may comprise patrolling in the field, taking photos of industrial assets and sending back to network 106, etc.) and attributes of robots 110.

Robots 110 comprise two or more discrete robots (e.g., robot 110A, 110B, 110C, etc.). Each of robots 110 comprises at least one component to interact physically with the environment, such as sensing components (e.g., temperature, humidity, explosive or toxic gas detection, motion detection, imaging, microphone, etc.) and/or actuator components (e.g., arms, grippers, drills, saws, speakers, etc.), and optionally locomotion components (e.g., wheels, legs, propellers, etc.) used to propel/position itself. Robots 110 further comprise components to provide internal power (e.g., batteries, power controllers, etc.), external communication (e.g., wireless networking components), and data processing (e.g., one or more microprocessors, data storage, etc.). In other embodiments, one or more robots 110 may comprise specialized components to perform a particular task(s) and the means to operate such components. In one embodiment, two or more robots 110 may be the same, such as the same manufacture and model, with identical configurations. In another embodiment, two or more robots 110 are different, such as different manufacturer, different model, and/or different configurations.

The processing unit (e.g., computer 104) may monitor the parameters received and determine if an unexpected event has occurred. Unexpected events are variously embodied and result in one or more robots 110 being impaired or unable to perform their task. An unexpected event may be contemplated. For example, robot 110B may report a battery-overheat condition. Alternatively, an unexpected event may not be complicated. For example, robot 110B may be moving to an assigned location to perform a task and reporting moving at one meter a second but the location of robot 110B is not changing (e.g., robot 110B may be stuck or entangled in an unknown obstruction). In another embodiment, sensor(s) 112 may report an unexpected event, such as within an environment (e.g., an industrial setting, a warehouse, a battlefield, building, etc.), such as the existence of fire, explosive gas, unexpected water or other fluid (e.g., a burst pipe), seismic activity, etc. In another embodiment, sensor(s) 112 may report an unexpected event, such as an abnormal temperature of a heater measured by a temperature sensor which requires immediately attention, in this case, the robot fleet management system would be able to coordinate among the current missions and the unexpected event, to address the unexpected event first.

In another embodiment, when an unexpected event occurs and one robot 110 is impaired, incapacitated, or otherwise unable to perform at least one task in a set of tasks, the processing unit sends a command to another robot 110 to perform the at least one task in the set of tasks. For example, robot 110A may be assigned a set of tasks that include the task of observing the reading of a particular gauge. However, robot 110A is blocked, trapped, experiencing a mechanical failure, or otherwise no longer able to obtain the reading. The processing unit receives a parameter from robot 110A and/or sensor 112 and, therefrom, determines an unexpected event has occurred. The processing unit then automatically sends a command to another robot, such as robot 110B, to perform the task and thereby obtain the reading of the gauge.

In another embodiment, the processing unit may send a command to a robot that is unable to perform a task, such as to recover (e.g., enter standby mode for 15 minutes and monitor the battery temperature) or preserve itself (e.g., retreat fifty meters to the west to avoid the fire). As a further option, one robot 110 may be commanded to rescue a disabled robot 110.

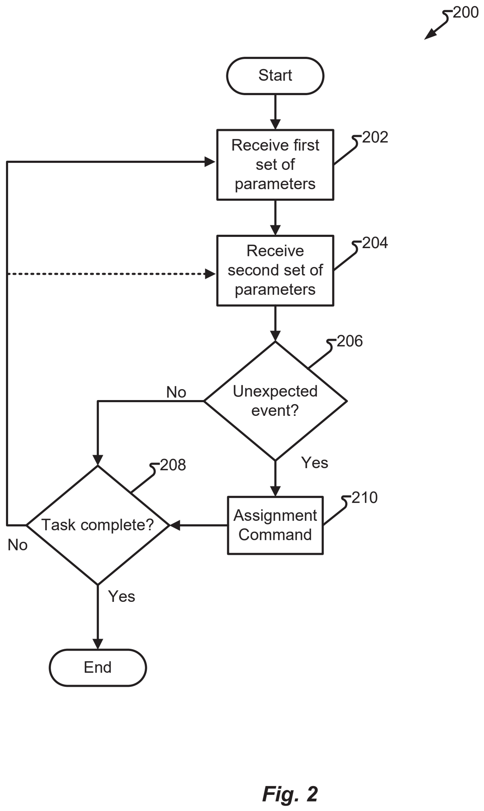

Fig. 2 depicts process 200 in accordance with embodiments of the present disclosure. In one embodiment, process 200 is embodied as machine-readable instructions maintained in a non-transitory computer memory that when read by a processing unit having at least one microprocessor, such as computer 104, cause the processing unit to execute the instructions and thereby execute process 200. The processing may include, but is not limited to, computer 104, a server, or a collection of servers (e.g., a "cloud" comprising a number of shared processors, a server farm, etc.). Steps of process 200, in one embodiment and as illustrated, are executed in discrete steps. However, one of ordinary skill in the art will appreciate that two or more steps/tests of process 200 may be partially or entirely executed concurrently.

Process 200 begins and, in step 202, a first set of parameters are received. The first set of parameters describe at least one of an activity and a capability of a first robot (of robots 110). The activities and/or capabilities may include, but are not limited to, a current operational state (e.g., battery level, in motion or stationary, performing a task, alarm, component failure, network connectivity strength, etc.), specialized observations (e.g., explosive gas detected, high environmental temperature/fire detected, unusual or important sound detected, intruder detected, etc.), and/or specialized operation (e.g., weight of current load, currently closing a valve, imaging gauge, etc.). Additionally or alternatively, the activities and capabilities may be more granular (e.g., main battery voltage, drive motor current draw, torque of lifting arm, rotational speed of drive gear, sound frequency, sound amplitude, etc.). The first robot is configured to execute a first set of tasks of a plurality of tasks. Similarly, the second robot is configured to execute a second set of tasks of the plurality of tasks.

The tasks of the plurality of tasks are variously embodied. In one embodiment, at least one task of the plurality of tasks are associated with a task definition which, in turn, is associated with at least one of a task type in a sequence of execution of the task, a pre-condition of execution of the task, a post condition of execution of the task, a task start condition, a task complete condition, and a task failure condition.

Step 204 receives (or accesses) a second set of parameters in a manner similar to those of step 202, but for a second robot (of robots 110).

Next, test 206 determines, based on the first set of parameters and the second set of parameters, that an unexpected event has occurred in an environment. The unexpected event may render one of the first robot or the second robot unable to perform at least one task of the first set of tasks or the second set of tasks, respectively. If test 206 is determined in the negative, processing continues to test 208 to determine if the task is complete and, if test 208 is determined in the affirmative, process 200 may end or, if test 208 is determined in the negative, in another embodiment, processing may loop back to step 202 and/or step 204.

When test 206, based on the first set of parameters and the second set of parameters, determines that an unexpected event has occurred within an environment, processing continues to step 210. Step 210 sends an assignment command to the first robot and/or the second robot to cause the first robot to automatically perform at least one task of the second set of tasks and/or cause the second robot to automatically perform at least one task of the first set of tasks. Processing may then continue to test step 208.

In one embodiment, the first set of tasks may be associated with a first piece of equipment. For example, the first robot of robots 110 may have a task to image a gauge and, due to the unexpected event, may be unable to perform the task at all or be unable to perform the task within a set of performance limits (e.g., with sufficient resolution, within a certain time window, etc.). Accordingly, step 210 adds the task to the second robot of robots 110 to automatically perform the task. Similarly, the second set of tasks may be associated with a different piece of equipment from the first piece of equipment or, additionally or alternatively, a different portion of the same piece of equipment.

In another embodiment, step 210 causes the first robot and the second robot to collectively optimize execution of the plurality of tasks. For example, if speed is a critical factor, the first robot and second robot may exchange location, estimated time to get to a location to perform the task, and/or speed in which the task is to be performed. The faster of the first robot or the second robot then automatically performs the task. Optionally, the slower robot of the first robot and the second robot may perform an additional task of the faster robot. Similarly, the robot that is best equipped or having the better capacity (e.g., highest resolution camera, most lifting capacity, most battery life, etc.) to perform the task may receive a task as a result of optimizing the task between the first robot and the second robot. Additionally or alternatively, step 210 may create an additional ask to the first set of tasks and/or the second set of tasks. In yet another option, step 210 may generate and send the assignment command to a third robot (of robots 110). The third robot is having a capability different from both the first robot and the second robot. For example, the third robot may have a capability different from both the first robot and the second robot, such as greater battery life, faster, more precise, designed to work in harsh/unsafe environment, speed to access the location to perform the task, speed to perform the task, etc.

The assignment command may be generated to achieve a specific task execution objective. For example, the task execution objective may comprise one or more of completing a maximum amount of the first set of tasks in the plurality of tasks and the second set of tasks in the plurality of tasks, completing the first set of tasks in the plurality of tasks and the second set of tasks in the plurality of tasks within a predetermined time period, completing the first set of tasks in the plurality of tasks and the second set of tasks in the plurality of tasks within an acceptable period of delay, completing the first set of tasks in the plurality of tasks and the second set of tasks in the plurality of tasks using optimized resources.

The data stored on the memory device may further enable the processing unit to receive a failure report associated with a robot's failure to achieve at least one task in the task execution objective. Additionally or alternatively, the data stored on the memory device further enables the processing unit to receive a robot status (e.g., robot location, battery level, and robot availability, etc.) for at least one of the first robot and the second robot. The data stored on the memory device may further enable the processing unit to evaluate the capability of the first robot and/or the capability of the second robot based on the robot status. Additionally or alternatively, the data stored on the memory device enables the processing unit to re-group tasks from the plurality of tasks into a task group (mission) for performance by the first robot or the second robot, wherein the tasks in the task group comprise at least one of: tasks having a substantially similar complexity, tasks being associated with common equipment, tasks being associated with a same type of equipment, and tasks being associated with a common location.

In another embodiment, the first set of parameters and/or the second set of parameters represent a site state or status. As an example, the first set of parameters and/or the second set of parameters may comprise at least one of a temperature, humidity, wind force, air quality, noise, and pressure obtained from a sensor in the site and the sensor reading(s) may represent a state of the site.

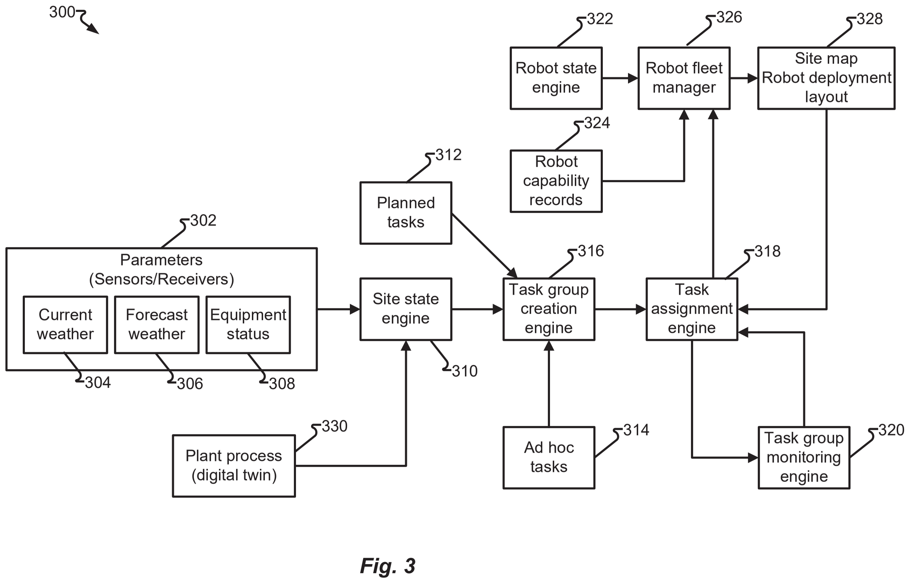

Fig. 3 depicts system 300 in accordance with embodiments of the present disclosure. System 300 illustrates data gathering/accessing, data processing, and data storage elements (e.g., tables, records, etc.). Parameters 302 may comprise one or more of current weather parameters 304, forecast weather parameters 306, equipment status parameters 308, and/or other parameters. For example, parameters 302 may provide current weather and/or forecasts for rain or snow as well as current equipment status, such as gas leaks.

Plant process 330 virtually executes a plant (e.g., equipment in an environment) to provide plant operation predictions to site state engine 310. Site state engine 310 receives/accesses the output from parameters 302 and/or plant process 330 to generate ad hoc task forecasts. Specifically, a plurality of site states will be generated based on the processing of the first and/or second set of parameters by the site state engine 310. Illustrative but non-limiting site states may include a "normal" state, under which routine tasks will be performed, and a "dynamic" state, under which an unexpected event has occurred within the environment (e.g. robot failure, equipment abnormal situation, weather etc.) that triggers an additional task. Planned tasks 312 maintain planned tasks for one or more robots used by task group creation engine 316 along with any ad hoc tasks forecasts from site state engine 310 and the actual ad hoc tasks 314. Task assignment engine 318 receives the output from task group creation engine 316 and, with bi-directional communication with task group monitoring engine 320, outputs assignments to robot fleet manager 326.

Robot capability records 324 provide robot capabilities and, alone with or robot state engine 322 providing robot health status, are used by robot fleet manager 326, which updates site map 328 of the robot deployments, which is additionally fed back into task assignment engine 318.

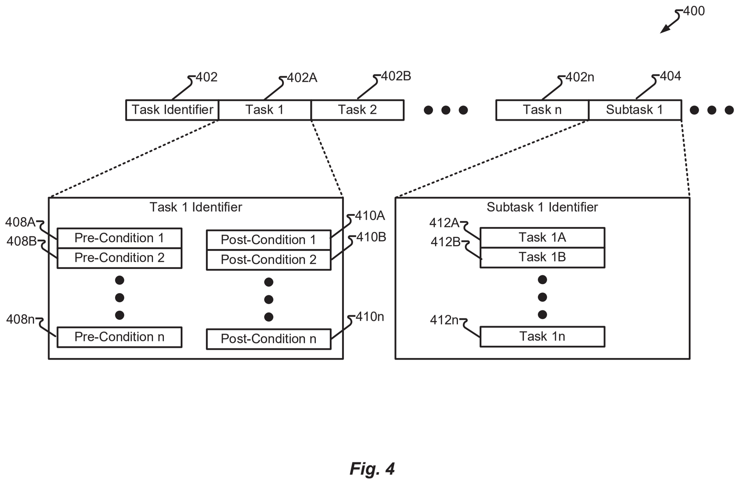

Fig. 4 depicts data structure 400 in accordance with embodiments of the present disclosure. Data structure 400 may define one or more records maintained as planned tasks 312 and/or ad hoc tasks 314 and may be stored in data storage 108 and/or another data storage device for access by a processing unit.

Data structure 400 may comprise task identifier 402. An identifier may be an index, a pointer, or a description (e.g., "Main Task"). Data structure 400 comprises at least one task identifier 402, for example, task 402A, 402B, through 402n. Additionally or alternatively, data structure 400 may comprise one or more subtasks, such as subtask 404.

Task 1 (402A) may comprise an identifier (e.g., a description) and at least one pre-condition 408 and post-condition 410. Pre-condition 408 may comprise a number of pre-conditions, such as pre-condition 1 (408A), precondition 2 (408B), through pre-condition n (408n). Pre-conditions define operations of a robot that are to be performed (e.g., determine sufficient battery power, detect an onboard camera, determine a path to a location, etc.). The robot, upon executing each of pre-conditions 408, then performs the task (e.g., take a picture, obtain an air sample, etc.). Once the task is performed, the robot may have one or more post-conditions 410 to perform, such as post-condition 1 (410A), post-condition 2 (410B), through post-condition n (410n). Post-conditions include tasks for the robot to complete to recover, reset, or verify a state (e.g., determine location, charging true/false, upload a captured image, etc.).

Subtasks 404 comprise two or more tasks, such as subtask 1A (412A), subtask 1B (412B), through subtask n (412n). As a benefit, sets of tasks may be modular and reusable.

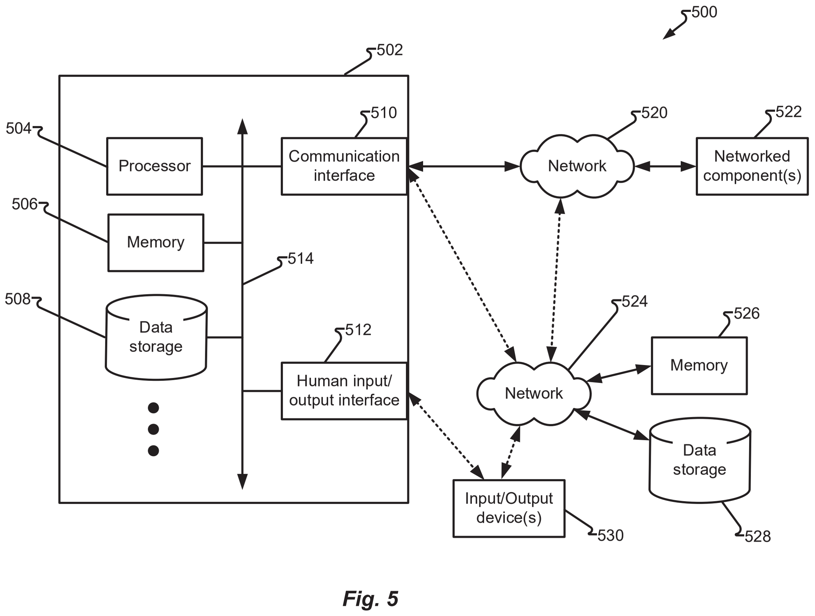

Fig. 5 depicts device 502 in system 500 in accordance with embodiments of the present disclosure. In one embodiment, a processing unit, computer 104 and/or one or more robots 110 may be embodied, in whole or in part, as device 502 comprising various components and connections to other components and/or systems. The components are variously embodied and may comprise processor 504. The term "processor," as used herein, refers exclusively to electronic hardware components comprising electrical circuitry with connections (e.g., pin-outs) to convey encoded electrical signals to and from the electrical circuitry. Processor 504 may comprise programmable logic functionality, such as determined, at least in part, from accessing machine-readable instructions maintained in a non-transitory data storage, which may be embodied as circuitry, on-chip read-only memory, computer memory 506, data storage 508, etc., that cause the processor 504 to perform the steps of the instructions. Processor 504 may be further embodied as a single electronic microprocessor or multiprocessor device (e.g., multicore) having electrical circuitry therein which may further comprise a control unit(s), input/output unit(s), arithmetic logic unit(s), register(s), primary memory, and/or other components that access information (e.g., data, instructions, etc.), such as received via bus 514, executes instructions, and outputs data, again such as via bus 514. In other embodiments, processor 504 may comprise a shared processing device that may be utilized by other processes and/or process owners, such as in a processing array within a system (e.g., blade, multi-processor board, etc.) or distributed processing system (e.g., "cloud", farm, etc.). It should be appreciated that processor 504 is a non-transitory computing device (e.g., electronic machine comprising circuitry and connections to communicate with other components and devices). Processor 504 may operate a virtual processor, such as to process machine instructions not native to the processor (e.g., translate the VAX operating system and VAX machine instruction code set into Intel^{®} 9xx chipset code to enable VAX-specific applications to execute on a virtual VAX processor). However, as those of ordinary skill understand, such virtual processors are applications executed by hardware, more specifically, the underlying electrical circuitry and other hardware of the processor (e.g., processor 504). Processor 504 may be executed by virtual processors, such as when applications (i.e., Pod) are orchestrated by Kubernetes. Virtual processors enable an application to be presented with what appears to be a static and/or dedicated processor executing the instructions of the application, while underlying non-virtual processor(s) are executing the instructions and may be dynamic and/or split among a number of processors.

In addition to the components of processor 504, device 502 may utilize computer memory 506 and/or data storage 508 for the storage of accessible data, such as instructions, values, etc. Communication interface 510 facilitates communication with components, such as processor 504 via bus 514 with components not accessible via bus 514 and may be embodied as a network interface (e.g., ethernet card, wireless networking components, USB port, etc.). Communication interface 510 may be embodied as a network port, card, cable, or other configured hardware device. Additionally or alternatively, human input/output interface 512 connects to one or more interface components to receive and/or present information (e.g., instructions, data, values, etc.) to and/or from a human and/or electronic device. Examples of input/output devices 530 that may be connected to input/output interface include, but are not limited to, keyboard, mouse, trackball, printers, displays, sensor, switch, relay, speaker, microphone, still and/or video camera, etc. In another embodiment, communication interface 510 may comprise, or be comprised by, human input/output interface 512. Communication interface 510 may be configured to communicate directly with a networked component or configured to utilize one or more networks, such as network 520 and/or network 524.

Network 106 may be embodied, in whole or in part, as network 520. Network 520 may be a wired network (e.g., Ethernet), wireless (e.g., WiFi, Bluetooth, cellular, etc.) network, or combination thereof and enable device 502 to communicate with networked component(s) 522. In other embodiments, network 520 may be embodied, in whole or in part, as a telephony network (e.g., public switched telephone network (PSTN), private branch exchange (PBX), cellular telephony network, etc.).

Additionally or alternatively, one or more other networks may be utilized. For example, network 524 may represent a second network, which may facilitate communication with components utilized by device 502. For example, network 524 may be an internal network to a business entity or other organization, whereby components are trusted (or at least more so) than networked components 522, which may be connected to network 520 comprising a public network (e.g., Internet) that may not be as trusted. Sensors 112 may be embodied as networked components 522.

Components attached to network 524 may include computer memory 526, data storage 528, input/output device(s) 530, and/or other components that may be accessible to processor 504. For example, computer memory 526 and/or data storage 528 may supplement or supplant computer memory 506 and/or data storage 508 entirely or for a particular task or purpose. As another example, computer memory 526 and/or data storage 528 may be an external data repository (e.g., server farm, array, "cloud," etc.) and enable device 502, and/or other devices, to access data thereon. Similarly, input/output device(s) 530 may be accessed by processor 504 via human input/output interface 512 and/or via communication interface 510 either directly, via network 524, via network 520 alone (not shown), or via networks 524 and 520. Each of computer memory 506, data storage 508, computer memory 526, data storage 528 comprise a non-transitory data storage comprising a data storage device.

It should be appreciated that computer readable data may be sent, received, stored, processed, and presented by a variety of components. It should also be appreciated that components illustrated may control other components, whether illustrated herein or otherwise. For example, one input/output device 530 may be a router, a switch, a port, or other communication component such that a particular output of processor 504 enables (or disables) input/output device 530, which may be associated with network 520 and/or network 524, to allow (or disallow) communications between two or more nodes on network 520 and/or network 524. One of ordinary skill in the art will appreciate that other communication equipment may be utilized, in addition or as an alternative, to those described herein without departing from the scope of the embodiments.

In the foregoing description, for the purposes of illustration, methods were described in a particular order. It should be appreciated that in alternate embodiments, the methods may be performed in a different order than that described without departing from the scope of the embodiments. It should also be appreciated that the methods described above may be performed as algorithms executed by hardware components (e.g., circuitry) purpose-built to carry out one or more algorithms or portions thereof described herein. In another embodiment, the hardware component may comprise a general-purpose microprocessor (e.g., CPU, GPU) that is first converted to a special-purpose microprocessor. The special-purpose microprocessor then having had loaded therein encoded signals causing the, now special-purpose, microprocessor to maintain machine-readable instructions to enable the microprocessor to read and execute the machine-readable set of instructions derived from the algorithms and/or other instructions described herein. The machine-readable instructions utilized to execute the algorithm(s), or portions thereof, are not unlimited but utilize a finite set of instructions known to the microprocessor. The machine-readable instructions may be encoded in the microprocessor as signals or values in signal-producing components by, in one or more embodiments, voltages in memory circuits, configuration of switching circuits, and/or by selective use of particular logic gate circuits. Additionally or alternatively, the machine-readable instructions may be accessible to the microprocessor and encoded in a media or device as magnetic fields, voltage values, charge values, reflective/non-reflective portions, and/or physical indicia.

In another embodiment, the microprocessor further comprises one or more of a single microprocessor, a multi-core processor, a plurality of microprocessors, a distributed processing system (e.g., array(s), blade(s), server farm(s), "cloud", multi-purpose processor array(s), cluster(s), etc.) and/or may be co-located with a microprocessor performing other processing operations. Any one or more microprocessors may be integrated into a single processing appliance (e.g., computer, server, blade, etc.) or located entirely, or in part, in a discrete component and connected via a communications link (e.g., bus, network, backplane, etc. or a plurality thereof).

Examples of general-purpose microprocessors may comprise a central processing unit (CPU) with data values encoded in an instruction register (or other circuitry maintaining instructions) or data values comprising memory locations, which in turn comprise values utilized as instructions. The memory locations may further comprise a memory location that is external to the CPU. Such CPU-external components may be embodied as one or more of a field-programmable gate array (FPGA), read-only memory (ROM), programmable read-only memory (PROM), erasable programmable read-only memory (EPROM), random access memory (RAM), bus-accessible storage, network-accessible storage, etc.

These machine-executable instructions may be stored on one or more machine-readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

In another embodiment, a microprocessor may be a system or collection of processing hardware components, such as a microprocessor on a client device and a microprocessor on a server, a collection of devices with their respective microprocessor, or a shared or remote processing service (e.g., "cloud" based microprocessor). A system of microprocessors may comprise task-specific allocation of processing tasks and/or shared or distributed processing tasks. In yet another embodiment, a microprocessor may execute software to provide the services to emulate a different microprocessor or microprocessors. As a result, a first microprocessor, comprised of a first set of hardware components, may virtually provide the services of a second microprocessor whereby the hardware associated with the first microprocessor may operate using an instruction set associated with the second microprocessor.

While machine-executable instructions may be stored and executed locally to a particular machine (e.g., personal computer, mobile computing device, laptop, etc.), it should be appreciated that the storage of data and/or instructions and/or the execution of at least a portion of the instructions may be provided via connectivity to a remote data storage and/or processing device or collection of devices, commonly known as "the cloud," but may include a public, private, dedicated, shared and/or other service bureau, computing service, and/or "server farm."

Examples of the microprocessors as described herein may include, but are not limited to, at least one of Qualcomm^{®} Snapdragon^{®} 800 and 801, Qualcomm^{®} Snapdragon^{®} 610 and 615 with 4G LTE Integration and 64-bit computing, Apple^{®} A7 microprocessor with 64-bit architecture, Apple^{®} M7 motion comicroprocessors, Samsung^{®} Exynos^{®} series, the Intel^{®} Core^{™} family of microprocessors, the Intel^{®} Xeon^{®} family of microprocessors, the Intel^{®} Atom^{™} family of microprocessors, the Intel Itanium^{®} family of microprocessors, Intel^{®} Core^{®} i5-4670K and i7-4770K 22nm Haswell, Intel^{®} Core^{®} i5-3570K 22nm Ivy Bridge, the AMD^{®} FX^{™} family of microprocessors, AMD^{®} FX-4300, FX-6300, and FX-8350 32nm Vishera, AMD^{®} Kaveri microprocessors, Texas Instruments^{®} Jacinto C6000^{™} automotive infotainment microprocessors, Texas Instruments^{®} OMAP^{™} automotive-grade mobile microprocessors, ARM^{®} Cortex^{™}-M microprocessors, ARM^{®} Cortex-A and ARM926EJ-S^{™} microprocessors, other industry-equivalent microprocessors, and may perform computational functions using any known or future-developed standard, instruction set, libraries, and/or architecture.

Any of the steps, functions, and operations discussed herein can be performed continuously and automatically.

The exemplary systems and methods of this disclosure have been described in relation to communications systems and components and methods for monitoring, enhancing, and embellishing communications and messages. However, to avoid unnecessarily obscuring the present disclosure, the preceding description omits a number of known structures and devices. This omission is not to be construed as a limitation of the scope of the claimed invention. Specific details are set forth to provide an understanding of the present disclosure. It should, however, be appreciated that the present disclosure may be practiced in a variety of ways beyond the specific detail set forth herein.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components or portions thereof (e.g., microprocessors, memory/storage, interfaces, etc.) of the system can be combined into one or more devices, such as a server, servers, computer, computing device, terminal, "cloud" or other distributed processing, or collocated on a particular node of a distributed network, such as an analog and/or digital telecommunications network, a packet-switched network, or a circuit-switched network. In another embodiment, the components may be physical or logically distributed across a plurality of components (e.g., a microprocessor may comprise a first microprocessor on one component and a second microprocessor on another component, each performing a portion of a shared task and/or an allocated task). It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radio-wave and infrared data communications.

Also, while the flowcharts have been discussed and illustrated in relation to a particular sequence of events, it should be appreciated that changes, additions, and omissions to this sequence can occur without materially affecting the operation of the invention.

A number of variations and modifications of the invention can be used. It would be possible to provide for some features of the invention without providing others.

In yet another embodiment, the systems and methods of this invention can be implemented in conjunction with a special purpose computer, a programmed microprocessor or microcontroller and peripheral integrated circuit element(s), an ASIC or other integrated circuit, a digital signal microprocessor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this invention. Exemplary hardware that can be used for the present invention includes computers, handheld devices, telephones (e.g., cellular, Internetenabled, digital, analog, hybrids, and others), and other hardware known in the art. Some of these devices include microprocessors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein as provided by one or more processing components.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this invention can be implemented as a program embedded on a personal computer such as an applet, JAVA^{®} or CGI script, as a resource residing on a server or computer workstation, as a routine embedded in a dedicated measurement system, system component, or the like. The system can also be implemented by physically incorporating the system and/or method into a software and/or hardware system.

Embodiments herein comprising software are executed, or stored for subsequent execution, by one or more microprocessors and are executed as executable code. The executable code being selected to execute instructions that comprise the particular embodiment. The instructions executed being a constrained set of instructions selected from the discrete set of native instructions understood by the microprocessor and, prior to execution, committed to microprocessor-accessible memory. In another embodiment, human-readable "source code" software, prior to execution by the one or more microprocessors, is first converted to system software to comprise a platform (e.g., computer, microprocessor, database, etc.) specific set of instructions selected from the platform's native instruction set.

Although the present invention describes components and functions implemented in the embodiments with reference to particular standards and protocols, the invention is not limited to such standards and protocols. Other similar standards and protocols not mentioned herein are in existence and are considered to be included in the present invention. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present invention.

The present invention, in various embodiments, configurations, and aspects, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments, configurations, or aspects for the purpose of streamlining the disclosure. The features of the embodiments, configurations, or aspects of the invention may be combined in alternate embodiments, configurations, or aspects other than those discussed above. This method of disclosure is not to be interpreted as reflecting an intention that the claimed invention requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the invention.

Moreover, though the description of the invention has included description of one or more embodiments, configurations, or aspects and certain variations and modifications, other variations, combinations, and modifications are within the scope of the invention, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

## Claims

1. A robot fleet management system, comprising:
a processing unit (104); and
a memory device coupled with the processing unit (104) and comprising data stored thereon that, when executed by the processing unit (104), enables the processing unit (104) to:
receive a first set of parameters from a first sensor (112), the first set of parameters describing at least one of an activity and a capability of a first robot (110A), wherein the first robot (110A) is configured to execute a first set of tasks (312, 314) in a plurality of tasks (312, 314);
receive a second set of parameters from a second sensor (112), the second set of parameters describing at least one of an activity and a capability of a second robot (110B), wherein the second robot (110B) is configured to execute a second set of tasks (312, 314) in the plurality of tasks (312, 314);
based on the first set of parameters and the second set of parameters, determine an unexpected event has occurred within an environment; and
based on determining that the unexpected event has occurred within the environment, send an assignment command to one or both of the first robot (110A) and the second robot (110B), wherein the assignment command causes the second robot (110B) to automatically perform at least one task (35, 312, 314, 402A, 402B) in the first set of tasks (312, 314) or causes the first robot (110A) to automatically perform at least one task (35, 312, 314, 402A, 402B) in the second set of tasks (312, 314).

2. The robot fleet management system of claim 1, wherein the first set of tasks (312, 314) is associated with a first piece of equipment and wherein the second set of tasks (312, 314) is associated with a second piece of equipment that is different from the first piece of equipment.

3. The robot fleet management system of claim 1 or 2, wherein the assignment command causes the first robot (110A) and the second robot (110B) to collectively optimize an execution of the plurality of tasks (312, 314).

4. The robot fleet management system of any of claims 1 to 3, wherein the first set of parameters is associated with at least one of the following: current weather associated with the environment, weather forecast associated with the environment, and operation state of a first set of equipment and wherein the second set of parameters is associated with at least one of the following: current weather associated with the environment, weather forecast associated with the environment, and operation state of the second set of equipment; and/or
wherein at least one of the first set of parameters and the second set of parameters comprises at least one of the following: temperature, humidity, wind force, air quality, noise and pressure.

5. The robot fleet management system of any of claims 1 to 4, wherein based on determining that the unexpected event has occurred within the environment, the processing unit (104) creates an additional task and adds the additional task to the plurality of tasks (312, 314).

6. The robot fleet management system of any of claims 1 to 5, wherein the first robot (110A) is assigned to tasks (312, 314) in the plurality of tasks (312, 314) based on the capability of the first robot (110A), wherein the second robot (110B) is assigned to tasks (312, 314) in the plurality of tasks (312, 314) based on the capability of the second robot (110B), and wherein the capability of the first robot (110A) is different from the capability of the second robot (110B).

7. The robot fleet management system of any of claims 1 to 6, wherein each task (35, 312, 314, 402A, 402B) in the plurality of tasks (312, 314) is associated with a task definition, and wherein the task definition associated with a task (35, 312, 314, 402A, 402B) is determined by at least one of: a task type, a sequence of execution of the task (35, 312, 314, 402A, 402B), a pre-condition (408) of execution of the task (35, 312, 314, 402A, 402B), a post condition of execution of the task (35, 312, 314, 402A, 402B), a task start condition, a task (35, 312, 314, 402A, 402B) complete condition, and a task failure condition.

8. The robot fleet management system of any of claims 1 to 7, wherein the assignment command is further sent to a third robot (110C) and wherein a capability of the third robot (110C) is different from the capability of the first robot (110A) and the capability of the second robot (110B).

9. The robot fleet management system of any of claims 1 to 8, wherein the assignment command is generated to achieve a task execution objective; and wherein preferably
the task execution objective comprises at least one of: completing a maximum amount of the first set of tasks (312, 314) in the plurality of tasks (312, 314) and the second set of tasks (312, 314) in the plurality of tasks (312, 314), completing the first set of tasks (312, 314) in the plurality of tasks (312, 314) and the second set of tasks (312, 314) in the plurality of tasks (312, 314) within a predetermined time period, completing the first set of tasks (312, 314) in the plurality of tasks (312, 314) and the second set of tasks (312, 314) in the plurality of tasks (312, 314) within an acceptable period of delay, and completing the first set of tasks (312, 314) in the plurality of tasks (312, 314) and the second set of tasks (312, 314) in the plurality of tasks (312, 314) using optimized resources.

10. The robot fleet management system of any of claims 1 to 9, wherein the data stored on the memory device further enables the processing unit (104) to receive a failure report associated with a robot's failure to achieve at least one task (35, 312, 314, 402A, 402B) in the task execution objective.

11. The robot fleet management system of any of claims 1 to 10, wherein the data stored on the memory device further enables the processing unit (104) to receive a robot status for at least one of the first robot (110A) and the second robot (110B).

12. The robot fleet management system of any of claims 1 to 11, wherein the data stored on the memory device further enables the processing unit (104) to re-group tasks (312, 314) from the plurality of tasks (312, 314) into a task group for performance by the first robot (110A) or the second robot (110B), and wherein the tasks (312, 314) in the task group comprise at least one of: tasks (312, 314) having a substantially similar complexity, tasks (312, 314) being associated with common equipment, tasks (312, 314) being associated with a same type of equipment, and tasks (312, 314) being associated with a common location.

13. The robot fleet management system of any of claims 1 to 12, wherein the processing unit (104) is further configured to simulate assigning the first set of tasks (312, 314) in the plurality of tasks (312, 314) and the second set of tasks (312, 314) in the plurality of tasks (312, 314) to at least one of the first robot (110A) and the second robot (110B), determine a simulation result, and in response to determining a success of the simulation result, execute the first set of tasks (312, 314) in the plurality of tasks (312, 314) and the second set of tasks (312, 314) in the plurality of tasks (312, 314).

14. The robot fleet management system of any of claims 1 to 13, wherein the processing unit (104) is further configured to: update at least one of the first set of tasks (312, 314) in the plurality of tasks (312, 314) and the second set of tasks (312, 314) in the plurality of tasks (312, 314) in response to a change of robot capability, wherein the robot capability is determined in accordance with at least one of: a robot type and a health status of the robot (110, 110A-C).

15. The robot fleet management system of claim 14, wherein updating at least one of the first set of tasks (312, 314) in the plurality of tasks (312, 314) and the second set of tasks (312, 314) in the plurality of tasks (312, 314) comprises changing a task definition of the at least one of the first set of tasks (312, 314) in the plurality of tasks (312, 314) and the second set of tasks (312, 314) in the plurality of tasks (312, 314).
